# EUROPEAN PATENT SPECIFICATION

(11) **EP 0 622 527 B1**
(45) Date of publication and mention of the grant of the patent: **02.05.1997**
(21) Application number: 94301037.1
(22) Date of filing: 14.02.1994
(51) Int. Cl.: F01L 1/02, F01L 1/34, F16D 1/06

(54) **An adjustable force transmission arrangement for a camshaft of a large diesel engine**
Einstellbare Drehmomentübertragungsvorrichtung für eine Nockenwelle eines Grossdieselmotors
Dispositif réglable de transmission de couple pour un arbre à cames d'un gros moteur diesel

(30) Priority: 16.02.1993 FI 930669
(43) Date of publication of application: 02.11.1994
(73) Proprietor: WARTSILA DIESEL INTERNATIONAL LTD OY, 00530 Helsinki (FI)
(72) Inventor: Gullberg, Lars, SF-65320 Vasa (FI)
(74) Representative: Newby, John Ross

(56) References cited:
- EP-A- 0 280 774
- EP-A- 0 429 377
- DE-C- 856 537
- FR-A- 2 405 406
- GB-A- 421 359

## Description

The invention relates to an adjustable force transmission arrangement in a large diesel engine for accomplishing force transmission from a crankshaft of the engine by means of gear wheels to at least one camshaft of the engine in accordance with the preamble of claim 1.

A large diesel engine as referred to herein means an engine usable for example as the main propulsion engine or as an auxiliary engine for a ship or for power generation in the form of heat and/or electricity in a power plant.

Force transmission arrangements for an engine camshaft are known, in which adjoining gear wheels are directly fixed to each other by means of screw bolts for example. In this case the setting of the rotational angle of the camshaft relative to the crankshaft can be changed by adjusting the relative positions of the gear wheels. For this purpose the holes provided for the screw bolts have to be oval so that the position of the screw bolts in the tangential direction of the gear wheels can be adjusted. This solution, however, allows for only a relatively small adjustment to be made and in addition it is a laborious procedure to make an adjustment.

EP-A-280774 discloses an adjustable force transmission arrangement including a guiding element fixed to the engine block and to which gear wheels needed for the force transmission are turnably supported. The adjustment is carried out so that the gear wheel fixed to the camshaft is temporarily released by utilizing a hydraulic fluid to thereby allow turning of the camshaft relative to the gear wheel and, thus, to the crankshaft. Therefore the arrangement is complicated and the adjustment operation time consuming.

A force transmission arrangement relying on friction between the gear wheels, known as such, would make it possible to accommodate large angular adjustments but for it to be a practical solution it would be necessary to ensure that the measures needed for accomplishing an adjustment are as simple as possible. Thus, one aim of the invention is to provide a force transmission arrangement relying on friction between two gear wheels which is constructionally uncomplicated and reliable. Also the mutual attachment and detachment of the gear wheels as well as the adjustment of the relative positions thereof should be accomplished as simply as possible.

The aims of the invention are accomplished in a way more clearly defined in claim 1 and in the other claims. The arrangement according to the invention is characterised in that the guiding element is supported by means of at least one bearing element to the engine block and in that the guiding element is arranged to be fixed to the first gear wheel by means of at least one screwed member so that the second gear wheel is clamped between the first gear wheel and the guiding element and receives from these pieces its location also in the radial direction. Thus, as the guiding element itself is turnably journalled to the engine block and has its location set both in the radial direction and in the axial direction, a force transmission arrangement according to this invention is uncomplicated and reliable. At the same time loosening and tightening of the gear wheels one to the other can take place In a simple way by means of said at least one screwed member from one end of the whole arrangement. Due to the frictional drive used between the gear wheels a large range of angular adjustment therebetween is possible.

Desirably the at least one bearing element provides a first bearing surface extending in the axial direction with regard to the first and second gear wheels and a second bearing surface substantially perpendicular to said first bearing surface, the guiding element being provided with a flange member extending in the radial direction which is arranged to cooperate with said second bearing surface for setting the location of said gear wheels in the axial direction thereof relative to the engine block.

Conveniently the arrangement includes a second bearing element arranged between the engine block and the second gear wheel which acts to confirm the location of the guiding element in the radial direction and in addition to set the location of the second gear wheel in the axial direction.

The invention will now be further described, by way of example, with reference to the accompanying drawing, the sole figure of which represents an arrangement according to the invention, shown in axial section.

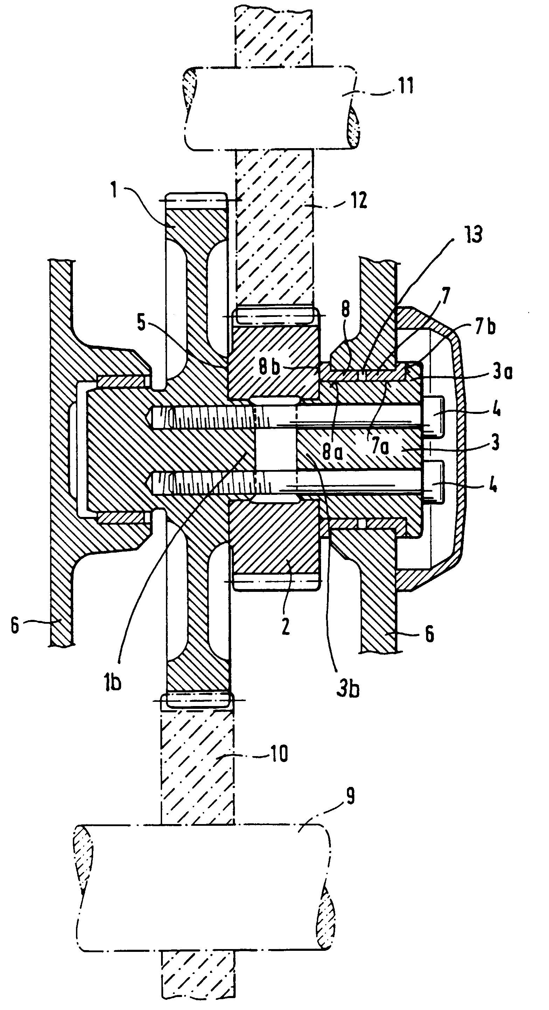

In the drawing 1 indicates a gear wheel, which is drivably connected to a crankshaft 9 of a large diesel engine by means of a gear wheel 10. Correspondingly, a gear wheel 2 is drivably connected to a camshaft 11 of the same engine by means of a gear wheel 12. With the exception of the gear wheels 1 and 2, the force transmission arrangements and the shafts are shown only schematically and in chain lines. Thus, in practice the force transmission arrangement can additionally include for instance one or more intermediate gear wheels should such be required.

The gear wheel 1 is mounted in bearings to one part of the block 6 of the engine. In addition a guiding element 3 is also mounted to the engine block 6 by means of a pair of annular bearing bushes 7 and 8 with a small clearance 13 therebetween. Location of the guiding element 3 in the radial direction is set by means of bearing surfaces 7a and 8a on the bushes 7 and 8, respectively. In addition, the guiding element 3 includes a flange member 3a, which sets its location in the axial direction through a bearing surface 7b of the bush 7, which surface 7b is perpendicular to the surface 7a thereof.

The guiding element 3 is secured to the gear wheel 1 by means of screw bolts 4 so that the gear wheel 2 is clamped between the gear wheel 1 and the guiding element 3. Force transmission from the gear wheel 1 to the gear wheel 2 then occurs through friction at surfaces 5 formed (as shown) by confronting faces of the wheels 1 and 2. A bearing surface 8b of the bush 8, which is perpendicular to the surface 8a thereof, confirms the location of the gear wheel 2 axially with respect to the element 3. The arrangement does not require any separate shaft, since the gear wheel 2 is mounted on (and thus is set in the radial direction by) spigot parts 1b, 3b of the gear wheel 1 and the guiding element 3, respectively.

The angular position of one of the gear wheels 1 and 2 with respect to the other (and thus the setting of the timing of the camshaft 11) can be changed by loosening the screw bolts 4, to reduce the frictional drag created at the friction surfaces 5 to the point where it allows turning of one gear wheel relative to the other. As any turning of the screw bolts 4 can be carried out from one end of the entire arrangement (i.e. the right-hand end as shown), loosening, adjustment and retightening operations can easily be accomplished.

The number of the screw bolts 4 is not decisive. The main thing is that a sufficiently large and uniform load is exerted over the friction surfaces 5 to securely lock the gear wheels 1, 2 together in any adjusted position. Thus, in principle, just one screw bolt positioned axially in the centre of element 3 and gear wheel 1 can be enough to provide a sufficient tightening force to secure the set adjustment between the gear wheels 1 and 2.

The bearing elements 7, 8 need not be annular bushes as shown provided they provide the required radial and axial positioning for the force transmission arrangement.

Thus, the invention is not limited to the embodiment illustrated, since several modifications thereof are feasible within the scope of the following claims.

## Claims

1. An adjustable force transmission arrangement in a large diesel engine for drivably linking a crankshaft (9) of the engine to at least one camshaft (11) of the engine, the arrangement including a first gear wheel (1), which is drivably connected to the crankshaft (9), and a second gear wheel (2), which is drivably connected to the camshaft (11), said gear wheels (1, 2) being arranged adjacent to each other in a force transmitting connection with each other which includes frictionally engaged surfaces (5), the arrangement comprising a guiding element (3) located relative to the engine block (6) both in the radial direction and in the axial direction, **characterised in that** said guiding element (3) is supported by means of at least one bearing element (7) to the engine block (6), and in that the guiding element (3) is arranged to be fixed to the first gear wheel (1) by means of at least one screwed member (4) so that the second gear wheel (2) is clamped between the first gear wheel (1) and the guiding element (3) and receives from these pieces its location also in the radial direction.

2. A force transmission arrangement according to claim 1, **characterised in that** the bearing element (7) is provided with a first bearing surface (7a) extending in the axial direction with regard to the first and second gear wheels (1, 2) and a second bearing surface (7b) substantially perpendicular with regard to said first bearing surface (7a) and in that the guiding element (3) is provided with a flange member (3a) extending in the radial direction and arranged to cooperate with said second bearing surface (7b) for setting the location of said gear wheels (1, 2) in the axial direction thereof relative to the engine block (6).

3. A force transmission arrangement according to claim 1 or claim 2, **characterised in that** a second bearing element (8) is provided which is arranged between the engine block (6) and said second gear wheel (2) and acts to set the location of said guiding element (3) in the radial direction and in addition to set the location of said second gear wheel (2) in the axial direction.

4. A force transmission arrangement according to claim 3, **characterised in that** the first and second bearing elements are flanged annular bushes (7, 8) surrounding part of the guiding element (3) and having a clearance (13) therebetween.

5. A force transmission arrangement according to any preceding claim, **characterised in that** the location of the second gear wheel (2) with respect to both the first gear wheel (1) and the guiding element (3) is set in both radial and axial directions by spigot parts (1b, 3b) formed on those pieces.

## Patentansprüche

1. Einstellbare Kraftübertragungsanordnung in einem großen Dieselmotor zum antriebsmäßigen Verbinden einer Kurbelwelle (9) des Motors mit mindestens einer Nockenwelle (11) des Motors, wobei die Anordnung ein erstes Zahnrad (1), das antriebsmäßig mit der Kurbelwelle (9) verbunden ist, und ein zweites Zahnrad (2), das antriebsmäßig mit der Nockenwelle (11) verbunden ist, enthält, wobei die Zahnräder (1, 2) nebeneinander in einer kraftübertragenden Verbindung miteineinander angeordnet sind, die reibschlüssig in Eingriff stehende Flächen (5) enthält, wobei die Anordnung ein Führungselement (3) umfaßt, das bezüglich des Motorblocks (6) sowohl in radialer als auch in axialer Richtung angeordnet ist, dadurch gekennzeichnet, daß das Führungselement (3) durch mindestens ein Lagerelement (7) an den Motorblock (6) gestützt wird und daß das Führungselement (3) so angeordnet ist, daß es mittels mindestens eines Schraubelements (4) so an dem ersten Zahnrad (1) befestigt werden kann, daß das zweite Zahnrad (2) zwischen dem ersten Zahnrad (1) und dem Führungselement (3) festgeklemmt und von diesen Teilen auch in radialer Richtung positioniert wird.

2. Kraftübertragungsanordnung nach Anspruch 1, dadurch gekennzeichnet, daß das Lagerelement (7) mit einer ersten Lagerfläche (7a), die sich in axialer Richtung bezüglich des ersten und zweiten Zahnrads (1, 2) erstreckt, und einer zweiten Lagerfläche (7b), die im wesentlichen senkrecht zu der ersten Lagerfläche (7a) steht, versehen ist und daß das Führungselement (3) mit einem Flanschglied (3a) versehen ist, das sich in radialer Richtung erstreckt und so angeordnet ist, daß es mit der zweiten Lagerfläche (7b) zum Einstellen der Position der Zahnräder (1, 2) in deren axialer Richtung bezüglich des Motorblocks (6) zusammenwirkt.

3. Kraftübertragungsanordnung nach Anspruch 1 oder 2, dadurch gekennzeichnet, daß ein zweites Lagerelement (8) vorgesehen ist, das zwischen dem Motorblock (6) und dem zweiten Zahnrad (2) angeordnet ist und dahingehend wirkt, die Position des Führungselements (3) in radialer Richtung und darüber hinaus die Position des zweiten Zahnrads (2) in axialer Richtung einzustellen.

4. Kraftübertragungsanordnung nach Anspruch 3, dadurch gekennzeichnet, daß das erste und zweite Lagerelement mit Flanschen versehene ringförmige Buchsen (7, 8) sind, die einen Teil des Führungselements (3) umgeben und dazwischen einen Abstand (13) aufweisen.

5. Kraftübertragungsanordnung nach einem der vorhergehenden Ansprüche, dadurch gekennzeichnet, daß die Position des zweiten Zahnrads (2) sowohl bezüglich des ersten Zahnrads (1) als auch des Führungselements (3) sowohl in radialer als auch in axialer Richtung durch an diesen Teilen angeformte Zapfenteile (1b, 3b) eingestellt wird.

## Revendications

1. Dispositif réglable de transmission de couple dans un gros moteur diesel pour relier de manière entraînable un vilebrequin (9) du moteur à au moins un arbre à cames (11) du moteur, le dispositif comportant une première roue d'engrenage (1), qui est connectée de manière entraînable au vilebrequin (9), et une deuxième roue d'engrenage (2), qui est connectée de manière entraînable à l'arbre à cames (11), lesdites roues d'engrenage (1, 2) étant disposées l'une à côté de l'autre selon une connexion de transmission de couple de l'une à l'autre, qui comporte des surfaces (5) en engagement par friction, le dispositif comprenant un élément de guidage (3) situé, par rapport au bloc moteur (6), à la fois dans la direction radiale et dans la direction axiale, **caractérisé en ce que** ledit élément de guidage (3) est supporté au moyen d'au moins un élément de palier (7) contre le bloc moteur (6), et en ce que l'élément de guidage (3) est disposé de manière à être fixé à la première roue d'engrenage (1) au moyen d'au moins un organe vissé (4) de sorte que la deuxième roue d'engrenage (2) soit serrée entre la première roue d'engrenage (1) et l'élément de guidage (3) et reçoive de ces pièces son positionnement également dans la direction radiale.

2. Dispositif de transmission de couple selon la revendication 1, **caractérisé en ce que** l'élément de palier (7) est pourvu d'une première surface de portée (7a) s'étendant dans la direction axiale par rapport aux première et deuxième roues d'engrenage (1, 2), et une deuxième surface de portée (7b) substantiellement perpendiculaire par rapport à ladite première surface de portée (7a), et en ce que l'élément de guidage (3) est pourvu d'un organe de bride (3a) s'étendant dans la direction radiale et disposé de manière à coopérer avec ladite deuxième surface de portée (7b) pour ajuster le positionnement desdites roues d'engrenage (1, 2) dans la direction axiale de celles-ci par rapport au bloc moteur (6).

3. Dispositif de transmission de couple selon la revendication 1 ou la revendication 2, **caractérisé en ce qu**'un deuxième élément de palier (8) est prévu, disposé entre le bloc moteur (6) et ladite deuxième roue d'engrenage (2) et agit de manière à ajuster le positionnement dudit élément de guidage (3) dans la direction radiale et pour ajuster en outre le positionnement de ladite deuxième roue d'engrenage (2) dans la direction axiale.

4. Dispositif de transmission de couple selon la revendication 3, **caractérisé en ce que** les premier et deuxième éléments de palier sont des douilles annulaires à brides (7, 8) entourant une partie de l'élément de guidage (3) et ayant entre elles un jeu (13).

5. Dispositif de transmission de couple selon l'une quelconque des revendications précédentes, **caractérisé en ce que** le positionnement de la deuxième roue d'engrenage (2) par rapport à la première roue d'engrenage (1) et à l'élément de guidage (3) est ajusté dans les directions radiale et axiale par des parties de goujon (1b, 3b) formées sur ces pièces.
